# EUROPEAN PATENT SPECIFICATION

(11) **EP 2 355 386 B1**
(45) Date of publication and mention of the grant of the patent: **17.08.2016**
(21) Application number: 09824398.3
(22) Date of filing: 03.11.2009
(51) Int. Cl.: H04L 5/14, H04L 25/02, H04L 5/00, H04W 72/04

(54) **METHOD AND EQUIPMENT FOR UPLINK CHANNEL TRANSMITTING, AND METHOD AND EQUIPMENT FOR CHANNEL ESTIMATING IN TDD SYSTEM**
VERFAHREN UND AUSRÜSTUNG FÜR UPLINK-KANALÜBERTRAGUNG SOWIE VERFAHREN UND AUSRÜSTUNG FÜR KANALSCHÄTZUNG IN EINEM TDD-SYSTEM
PROCÉDÉ ET ÉQUIPEMENT D ÉMISSION SUR CANAL MONTANT, PROCÉDÉ ET ÉQUIPEMENT D ESTIMATION DE CANAL DANS UN SYSTÈME TDD

(30) Priority: 04.11.2008 CN 200810225528
(43) Date of publication of application: 10.08.2011
(73) Proprietor: Xiaomi Inc., Beijing 100085 (CN)
(72) Inventor: YANG, Yu, Beijing 100083 (CN)
(74) Representative: Nony
(86) International application number: PCT/CN2009/074764
(87) International publication number: WO 2010/051743

(56) References cited:
- CN-A- 1 474 525
- CN-A- 1 529 950
- CN-A- 1 540 900
- TD TECH: "Uplink Channel Estimation for 1.28Mcps TDD MIMO", 3GPP DRAFT; R1-082901, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080813, 13 August 2008 (2008-08-13), XP050316378, [retrieved on 2008-08-13]
- MITSUBISHI ELECTRIC: "Comparison of closed-loop antenna selection with open-loop transmit diversity (antenna switching between TTIs)", 3GPP DRAFT; R1-070524_SWITCHING_BETWEEN_TTI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20070110, 10 January 2007 (2007-01-10), XP050104551, [retrieved on 2007-01-10]
- MITSUBISHI ELECTRIC: "Comparison of closed-loop antenna selection with open-loop transmit diversity (antenna switching within a TTI)", 3GPP DRAFT; R1-070523_SWITCHING_WITHIN_TTI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20070110, 10 January 2007 (2007-01-10), XP050104550, [retrieved on 2007-01-10]
- CATT: "Uplink channel estimation in MIMO for LCR TDD", 3GPP DRAFT; R1-083551, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050316915, [retrieved on 2008-09-24]
- CATT: "Uplink channel estimation method in MIMO for LCR TDD", 3GPP DRAFT; R1-084220, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081104, 4 November 2008 (2008-11-04), XP050317507, [retrieved on 2008-11-04]
- TD TECH: "Uplink Channel Estimation for 1.28Mcps TDD MIMO", 3GPP DRAFT; R1-084155_UPLINK CHANNEL ESTIMATION FOR 1.28MCPS TDD MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081104, 4 November 2008 (2008-11-04), XP050317451, [retrieved on 2008-11-04]

## Description

### Field of the Invention

The present invention relates to the field of communications and particularly to uplink channel transmission and channel estimation methods and devices in a TDD system.

### Background of the Invention

Technologies of Multiple Input Multiple Output (MIM0), Higher Order Modulation (HOM), etc., are introduced in many incoming communication systems, e.g., High Speed Packet Access Plus (HSPA+), Long Term Evolution (LTE), etc., to further improve a data transmission rate and a transmission capacity of the systems. Uplink channel estimation is typically required at a Node B to acquire a full channel matrix so that a system operating in the MIMO mode may perform operations of Singular Value Decomposition (SVD) based codebook-free pre-coding, switching of an antenna mode, Adaptive Modulation and Coding (AMC), etc., with use of Time Division Duplex (TDD) specific interoperability between uplink and downlink channels.

However, in view of issues of a UE, e.g., a hardware implementation, a wearing cost, etc., a plurality of antennas of the UE in the TDD system are typically restricted to only concurrent reception for the purpose of acquiring reception diversity but can not be used for concurrent transmission, that is, the UE can only transmit data over a single antenna, thus making it impossible to ensure multi-antenna performance of the TDD system. Furthermore, this means in the MIMO-enabled TDD system that the Node B can only acquire from uplink channel estimation those channel fading coefficients between the single antenna of the UE and respective reception antennas of the Node B but can not acquire a full uplink channel matrix each time the UE perform uplink transmission.

TD TECH discloses in *"Uplink Channel Estimation for 1.28Mcps TDD MIMO",* 3GPP DRAFT; R1-082901 the following: after UE is scheduled by HS-SCCH, the corresponding HS-SICH is transmitted on virtual antenna port 1 and Node B completes the channel estimation between virtual antenna port 1 and the receive antennas at Node B by the midamble shift on HS-SICH. In the timeslot next to the HS-SICH timeslot, a stand alone midamble is transmitted by UE on virtual antenna port 2. Node B can derive the channel estimation between virtual antenna port 1 and the receive antennas at Node B by the stand alone midamble.

MITSUBISHI ELECTRIC discloses in *"Comparison of closed-loop antenna selection with open-loop transmit diversity (antenna switching between TTIs)",* 3GPP DRAFT1 R1-070524_SWITCHING_BETWEEN_TTI, a closed-loop antenna selection scheme and an open-loop antenna selection scheme. In the closed-loop antenna selection scheme, the UE with 1 RF chain transmits pilot signals from the available 2 antennas, the eNodeB then chooses the optimal transmit antenna and feeds its choice back to the UE. The UE then switches to the selected antenna for future transmissions. In the open-loop antenna selection scheme, no feedback from the eNodeB is available to the UE. Therefore, a Ue with one power amplifier and RF chain that switches between TTIs can at best alternate between its transmit antennas in transmitting its TTIs.

MITSUBISHI ELECTRIC discloses in *"Comparison of closed*-*loop antenna selection with opert-loop transmit diversity (antennas switching within a TTI)",* 3GPP DRAFT1 R1-070523_SWITCHING_WITHIN_TTI a closed-loop antenna selection scheme and an open-loop antenna selection scheme. In the closed-loop antenna selection scheme, the UE adaptively uses the antenna with the best current channel state for transmission. For this, the eNodeB periodically feeds back to the UE which of the two antennas to use for transmission. In the open-loop antenna selection scheme, no feedback is available from the eNodeB to the UE about which antenna to use for transmission. Switching from one antenna to the other within a TTI is therefore done periodically.

### Summary of the Invention

An aspect of the invention provides an uplink channel transmission method and device in a TDD system as recited in the accompanying claims to improve error-code performance of data of the TDD system where a UE is provided with a plurality of antennas and hence ensure multi-antenna performance of the TDD system.
An uplink channel transmission method in a TDD system, the method including: acquiring from allocation signaling of a resource, by a user equipment, the resource for transmitting an uplink channel allocated from a network side, upon entering a MIMO mode; and when each of Transmission Time Intervals, TTIs, comprised in the resource comprises a single uplink timeslot, transmitting by the user equipment the uplink channel alternately over a plurality of antennas sequentially in respective TTIs; wherein for each TTI, the transmitting includes: determining by the user equipment, from received downlink control channel information transmitted from the network side and a mapping relationship between downlink control channel information and assigned statuses prescribed with a Node B, an antenna for use in the TTI, wherein each of the assigned statuses corresponds to one antenna among the plurality of antennas; and transmitting the uplink channel in the TTI over the determined antenna; wherein the downlink control channel information is: a value of signaling over a downlink channel; or a signaling bit configured over the downlink channel to notify the user equipment about a specific antenna for use; or a System Frame Number of the downlink channel.
A user equipment, including: a resource acquiring unit configured to acquire, from allocation signaling of a resource, the resource for transmitting an uplink channel allocated from a network side, upon entering a MIMO mode; a determination unit configured to determine whether each of Transmission Time Intervals, TTIs, comprised in the resource comprises a single uplink timeslot; and a transmission unit configured to transmit the uplink channel over a plurality of antennas by transmitting the uplink channel alternately over the antennas sequentially in respective TTIs when each of TTIs comprised in the resource comprises a single uplink timeslot; wherein the user equipment further comprises a control information reception unit configured to receive downlink control channel information transmitted from the network side for each TTI, and wherein the transmission unit comprises: a first antenna selection sub-unit configured to determine, for each TTI, from the downlink control channel information and a mapping relationship between downlink control channel information and assigned statuses prescribed with a Node B, an antenna for use in the TTI, wherein each of the assigned statuses corresponds to one antenna among the plurality of antennas; and a first transmission sub-unit configured to transmit the uplink channel in the TTI over a determined antenna; wherein the downlink control channel information is: a value of signaling over a downlink channel; or a signaling bit configured over the downlink channel to notify the user equipment about a specific antenna for use; or a System Frame Number of the downlink channel.

Another aspect of the invention provides a channel estimation method and device in a TDD system as recited in the accompanying claims so that the TDD system can acquire full uplink channel estimation in the case that a UE can not perform uplink transmission concurrently over a plurality of antennas to ensure multi-antenna performance of the TDD system.
A channel estimation method in a TDD system, the method including: receiving by a Node B an uplink channel transmitted from a user equipment; determining an antenna used for the user equipment to transmit the uplink channel; and performing channel estimation on the uplink channel to acquire a column in a channel matrix corresponding to the antenna; wherein when each of Transmission Time Intervals, TTIs, comprised in a resource allocated from a network side to the user equipment comprises a single uplink timeslot, for each TTI, the determining includes: determining by the Node B, from downlink control channel information transmitted to the user equipment and a mapping relationship between downlink control channel information and assigned statuses prescribed with the user equipment, an antenna used for the user equipment in the TTI, wherein each of the assigned statuses corresponds to one antenna among the plurality of antennas; wherein the downlink control channel information is: a value of signaling over a downlink channel; or a signaling bit configured over the downlink channel to notify the user equipment about a specific antenna for use; or a System Frame Number of the downlink channel.
A Node B, including: a signal reception unit configured to receive an uplink channel transmitted from a user equipment; an antenna determination unit configured to determine an antenna used for the user equipment to transmit the uplink channel; and a channel estimation unit configured to perform channel estimation on the uplink channel and to acquire a column in a channel matrix corresponding to the antenna; wherein when each of Transmission Time Intervals, TTIs, comprised in a resource allocated from a network side to the user equipment comprises a single user equipment to transmit the uplink channel by: determining, from downlink control channel information transmitted to the user equipment and a mapping relationship between downlink control channel information and assigned statuses prescribed with the user equipment, an antenna used for the user equipment in the TTI, wherein each of the assigned statuses corresponds to one antenna among the plurality of antennas; wherein the downlink control channel information is: a value of signaling over a downlink channel; or a signaling bit configured over the downlink channel to notify the user equipment about a specific antenna for use; or a System Frame Number of the downlink channel.

In the uplink channel transmission method and device in a TDD system according to the invention, in the case that the UE is provided with a plurality of antennas and restricted to uplink transmission only over a single antenna, uplink channels are transmitted over the antennas switched alternately in the time domain, and when parts of data over these uplink channels contain the same information, this method can offer a gain of transmission diversity, which can be acquired at the Node B by decoding reception over the uplink channels, thereby improving error-code performance of data and ensuring multi-antenna performance of the TDD system.

In the channel estimation method and device in a TDD system according to the invention, the Node B receives an uplink channel transmitted from the UE; an antenna used for the UE to transmit the uplink channel is determined; and channel estimation is performed on the uplink channel to acquire a column in a channel matrix corresponding to the antenna. Thus, the Node B can acquire the full channel matrix after acquiring columns in the channel matrix corresponding to respective antennas of the UE so that the TDD system can acquire full uplink channel estimation in the case that the UE can not perform uplink transmission concurrently over a plurality of antennas to ensure multi-antenna performance of the TDD system.

### Brief Description of the Drawings

Fig. 1 is a flow chart of an uplink channel transmission method in a TDD system according to an embodiment of the invention;
Fig. 2 is a schematic diagram of the structure of a user equipment according to a first embodiment of the invention;
Fig. 3 is a schematic diagram of the structure of a user equipment according to a second embodiment of the invention;
Fig. 4 is a schematic diagram of the structure of a user equipment according to a third embodiment of the invention;
Fig. 5 is a flow chart of a channel estimation method in a TDD system according to an embodiment of the invention; and
Fig. 6 is a schematic diagram of the structure of a Node B according to an embodiment of the invention.

### Detailed Description of the Embodiments

Embodiments of the invention will be further detailed hereinafter with reference to the drawings and embodiments to make those skilled in the art better understand the solutions in the embodiments of the invention.

In an uplink channel transmission method in a TDD system according to an embodiment of the invention, in the case that a UE is provided with a plurality of antennas and restricted to uplink transmission only over a single antenna, uplink channels are transmitted over the antennas switched alternately in the time domain, and when parts of data over these uplink channels contain the same information, this method can offer a gain of transmission diversity, which can be acquired at a Node B by decoding reception over the uplink channels, thereby improving error-code performance of data and ensuring multi-antenna performance of the TDD system.

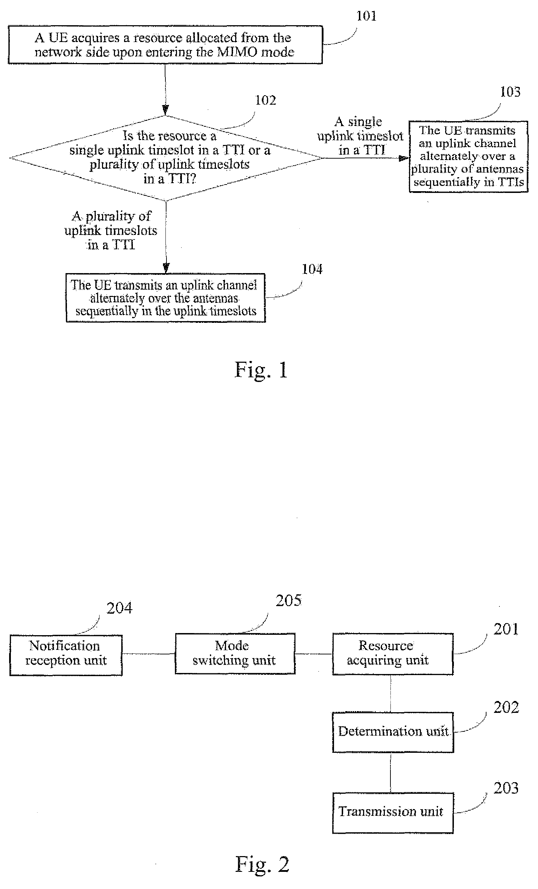

Reference is made to Fig. 1 illustrating a flow chart of an uplink channel transmission method in a TDD system according to an embodiment of the invention, which includes the following operations 101-104.

In the operation 101, a UE acquires a resource allocated from the network side upon entering the MIMO mode;

The UE enters the MIMO mode according to a received notification of radio resource control signaling from the network side and then reads allocation signaling of a resource from the network side, where the allocation signaling is transmitted from a Node B or a Radio Network Controller (RNC);

In the operation 102, it is determined whether the resource is a single uplink timeslot in a Transmission Time Interval (TTI) or a plurality of uplink timeslots in a TTI; and if it is a single uplink timeslot in a TTI, then the flow goes to the operation 103; otherwise, the flow goes to the operation 104;

In the operation 103, the UE transmits an uplink channel alternately over a plurality of antennas sequentially in TTIs.

In the operation 104, the UE transmits an uplink channel alternately over the antennas sequentially in the uplink timeslots.

The uplink channel transmission method in a TDD system according to the embodiment of the invention can be applicable to a scenario where a UE is provided with a plurality of antennas. For convenience of a description, the embodiment of the invention will be further detailed below taking a TDD HSPA+ system where a UE is provided with two antennas as an example.

Assumed the UE transmits an uplink channel alternately over the two antennas switched in the time domain and the Node B and the UE prescribe reference numerals of the two antennas of the UE as Tx1 and Tx2. An uplink physical channel transmitted from the UE includes a High-Speed Shared Information Channel (HS-SICH), an Enhanced Uplink Physical Channel (E-PUCH), a Dedicated Physical Channel (DPCH), etc. The UE enters the MIMO operating mode in response to a notification of upper signaling and then determines from allocation of a resource at the network side (e.g., scheduling information over a downlink control channel of the Node B, allocation of uplink and downlink resources by the RNC, etc.) whether the resource allocated to the UE is a single uplink timeslot in a TTI or a plurality of uplink timeslots in a TTI. There are the following two cases.
1. When there are a plurality of uplink timeslots in a TTI, an uplink channel is transmitted alternately over the two antennas of the UE in the timeslots.
   The UE determines from allocation of a resource at the network side that a plurality of uplink timeslots in a TTI are allocated to the UE for transmission. Assumed there are a number N of uplink timeslots, i.e., TSup1, Tsup2 ..., TSupN. The N uplink timeslots allocated to the UE may or may not be consecutive.
   Assumed the uplink physical channel is transmitted alternately over the two antennas Tx1 and Tx2 of the UE switched in the time domain in the N uplink timeslots. The UE and the Node B prescribe a correspondence relationship between the two antennas of the UE and the uplink timeslots in a TTI. For example, there is transmission over Tx1 in the timeslots of TSup1, TSup3 ... and over Tx2 in the timeslots of TSup2, TSup4 ... That is, the prescribed antenna of the UE used in the timeslots of TSup1, TSup3 ... is Tx1, and the prescribed antenna of the UE used in the timeslots af TSup2, TSup4 ... is Tx2.
   It can be ensured that the Node B can identify properly which one of the antennas is used by the UE for transmission according to the prescribed reference numerals of the antennas and the correspondence relationship between the antennas of the UE and the uplink timeslots and may not mistake a relationship between the antenna of the UE and a corresponding column in a channel matrix stored in the Node B even in the case of occurring abnormality, e.g., lost of a transmitted channel, etc.
   Furthermore, in order to further ensure consistent identifying of an antenna by the Node B and the UE in the case of a lost control channel in the uplink timeslots, it can be prescribed that an uplink physical channel be transmitted over a specific antenna of the UE in a specific uplink timeslot and transmitted alternately over the two antennas of the UE in the other uplink timeslots.
   a) If there is an HS-SICH to be transmitted, then it is prescribed that a specific antenna of the UE be used fixedly for the HS-SICH, or one of the antennas of the UE is selected for transmission of the HS-SICH in a way that the reference numeral of the antenna corresponds to the parity of a value of HS-SCCH Cyclic Serial Number (HCSN) signaling over a High-Speed Shared Control Channel (HS-SCCH). With reference to the antenna of the UE used in a timeslot for transmission of the HS-SICH, an uplink channel, e.g., an E-PUCH or a DPCH, is transmitted alternately over Tx1 and Tx2 sequentially in the other uplink timeslots.
   b) If there is a scheduled E-PUCH instead of an HS-SICH in the uplink timeslots, then a specific antenna of the UE can be used fixedly for transmission of the E-PUCH in a specific uplink timeslot, e.g., a first uplink timeslot, or one of the antennas of the UE can be selected for transmission of the E-PUCH in a way that the reference numeral of the antenna corresponds to the parity of a value of Enhanced Absolute Grant Channel (E-AGCH) Cyclic Serial Number (ECSN) signaling over an E-AGCH. With reference to the first uplink timeslot, an uplink channel, e.g., an E-PUCH or a DPCH, is transmitted alternately over Tx1 and Tx2 sequentially in the other uplink timeslots.
   c) If there is neither HS-SICH nor scheduled E-PUCH to be transmitted, then the UE can transmit an uplink channel, e.g., an uplink DPCH or a non-scheduled E-PUCH alternately over Tx1 and Tx2 in these uplink timeslots according to the lastly used antenna.
   d) No uplink random access physical channel is used to perform an operation of e.g., uplink channel estimation, etc.
2. When there is a single uplink timeslot in a TTI, an uplink channel is transmitted alternately over the two antennas of the UE in TTIs.

If the UE determines from allocation of a resource at the network side that a single uplink timeslot in a TTI is allocated to the UE for transmission, then the UE shall transmit an uplink physical channel alternately over the two antennas switched in the time domain in TTIs.

In order to ensure that the Node B can identity properly an antenna used by the UE, the Node B and the UE shall collectively maintain the serial numbers of the transmission antennas of the UE, i.e., Tx1 and Tx2, so that the Node B can follow the transmission antenna used by the UE.

The Node B and the UE collectively initiate assignment of the serial numbers of the transmission antennas of the UE in which two statuses of "Odd" and "Even" can be assigned, where "Odd" corresponds to Tx1 of the UE and "Even" corresponds to Tx2 of the UE. Each time the Node B allocates a physical resource (including a timeslot, a channelization code, etc.) to the UE through scheduling, the UE transmits an uplink physical channel over the physical resource. When there is a single uplink timeslot in a TTI, the UE transmits the uplink physical channel alternately over the two antennas in the single uplink timeslot in each TTI.

In this case, the Node B can notify over a downlink control channel the UE about the antenna used in the single uplink timeslot, thereby ensuring consistency of an assigned status between them.
(1) The antenna is indicated implicitly over the control channel. For example, 3-bit HCSN signaling over an HS-SCCH takes values of 0 to 7 for the purpose of making a statistic of a bit error ratio over the HS-SCCH in a power control process. Therefore the Node B and the UE can make the assigned statuses of the two antennas of the UE consistent between them by the parity of the value of the HCSN signaling. For example, assumed when the HCSN signaling takes an odd value, the UE transmits an uplink control channel, e.g., an HS-SICH, etc., over the single uplink timeslot over Tx1; and when the HCSN signaling takes an even value, the UE transmits the uplink control channel, e.g., the HS-SICH, etc., over the single uplink timeslot over Tx2. In analogy to an HCSN, Enhanced Absolute Grant Channel (E-AGCH) Cyclic Serial Number (ECSN) signaling of also 3 bits over an E-AGCH can alternatively be used to calculate an error bit ratio over the E-AGCH, and therefore the UE can also be notified with the parity of the signaling about which of the antennas is used for transmission of an uplink physical channel, e.g., an E-PUCH, etc., in the single uplink timeslot, thereby ensuring that the Node B and the UE can assign the statuses of the two antennas of the UE consistently. In general, a status assigned by the Node B and the UE shall be consistent with the parity of a value of HCSN or ECSN signaling, that is, the UE shall transmit the uplink channel in a TTI allocated to the UE over a corresponding antenna upon reception of the downlink signaling from the Node B, and next the Node B and the UE shall change the assigned status according to the parity of the value of the HCSN or ECSN signaling to thereby ensure that they will still identify the antenna consistently in the next TTI.
(2) The antenna is indicated explicitly over the control channel, that is, a specialized signaling bit is configured over a downlink control channel to notify the UE, and this bit of signaling shall identify two statuses, where the Node B may notify the UE about which of the antennas is used for transmission of an uplink channel in a TTI with a single uplink timeslot.
(3) The antenna is indicated in a System Frame Number (SFN) which is transmitted from the Node B over a broadcast channel at a fixed interval of time to maintain synchronization between the Node B and the UE. The SFN ranges from 0 to 4095 and identifies the serial number of a 10 ms frame. The Node B and the UE can acquire consistent assigned statuses of the two antennas of the UE by the parity of the SFN. For example, when the SFN is odd, the UE transmits an uplink physical channel over Tx1, and when the SFN is even, the UE transmits the uplink physical channel over Tx2. The Node B knows from the parity of the SFN which of the antennas is currently used for the UE to transmit the uplink physical channel.

In this regard, it is possible to unify alternate transmission over the two antennas of the UE in a plurality of timeslots in a TTI and alternate transmission over the two antennas of the UE in a plurality of TTIs with a single timeslot, both of which will be described collectively as follows.

A serial number parameter of a resource TTI allocated by the network side to the UE is assumed as SN, and when HCSN or ECSN signaling is used, the SN takes 0 or 1 dependent upon the parity of the signaling. For example, the SN is 1 when the signaling takes an odd value and 0 when the signaling takes an even value. Assumed a resource of a plurality of TTIs each possibly with a single uplink timeslot or a plurality of consecutive or discrete timeslots is allocated from the network side to the UE.

The uplink timeslots allocated to the UE in each TTI are sorted in an ascending order and numbered 1, 2 ... N, which correspond respectively to the uplink timeslots TSup1, TSup2 ... TSupN allocated to the UE. Then in an uplink timeslot TSupi which is a TTI numbered i, the reference numerals of the antennas in use of the UE are as follows.
If (i + SN) mod 2 = 1, then Tx1 of the UE is used; and
If (i + SN) mod 2 = 0, then Tx2 of the UE is used.

The SN shall be modified for each TTI allocated to the UE. In the System Frame Number (SFN) approach as described in (3) above, the SN can be 1 when the SFN is odd and 0 when the SFN is even.

The TDD HSPA+ system where the UE is provided with two antennas has been described as an example in the foregoing description. Equally, the uplink channel transmission method in a TDD system according to the embodiment of the invention can also be applicable to a scenario where the UE is provided with a plurality of antennas, and in this regard, in the forging two cases, i.e., when the UE determines, from a correspondence relationship between the antennas and the timeslots as prescribed with the Node B, antennas for use in the respective uplink timeslots, or when the UE determines, from received downlink channel information and assigned statuses prescribed with the Node B, one of the antennas for use in a single TTI, the UE shall determine a specific value, i.e., a value of the reference numeral of a corresponding antenna, which cannot be determined simply from the parity of a value of corresponding information. For example, for transmission over three antennas with reference numerals of 1, 2 and 3 in an uplink timeslot, specialized signaling bits may be configured over a downlink control channel to notify the UE, and the bits of signaling shall identify three statuses, each of which corresponds the reference numeral of an antenna used for the UE to transmit an uplink channel in a TTI with a single uplink timeslot.

With the uplink channel transmission method in a TDD system according to the embodiment of the invention, in the case that the UE is provided with a plurality of antennas and restricted to uplink transmission only over a single antenna, uplink channels are transmitted over the antennas switched alternately in the time domain, and when parts of data over these uplink channels contain the same information, this method can offer a gain of transmission diversity, which can be acquired at the Node B by decoding reception over the uplink channels, thereby improving error-code performance of data.

Correspondingly, an embodiment of the invention further provides a user equipment as illustrated in Fig. 2 illustrating a schematic diagram of the structure of the user equipment according to a first embodiment.

The user equipment includes a resource acquiring unit 201, a determination unit 202 and a transmission unit 203 and possibly also a notification reception unit 204 and a mode switching unit 205. Particularly, the resource acquiring unit 201 is configured to acquire a resource allocated from the network side upon entering the MIMO mode; the determination unit 202 is configured to determine whether the resource is a single uplink timeslot in a TTI or a plurality of timeslots in a TTI; and the transmission unit 203 is configured to transmit an uplink channel over a plurality of antennas by transmitting the uplink channel alternately over the antennas sequentially in TTIs if the resource is a single uplink timeslot in a TTI or by transmitting the uplink channel alternately over the antennas sequentially in a plurality of uplink timeslots if the resource is the uplink timeslots in a TTI. The notification reception unit 204 is configured to receive a notification of radio resource control signaling transmitted from the network side; and the mode switching unit 205 is configured to enter the MIMO mode in response to the notification of radio resource control signaling transmitted from the network side.

The transmission unit 203 may be in a varying structural form in correspondence to a varying resource allocated from the network side.

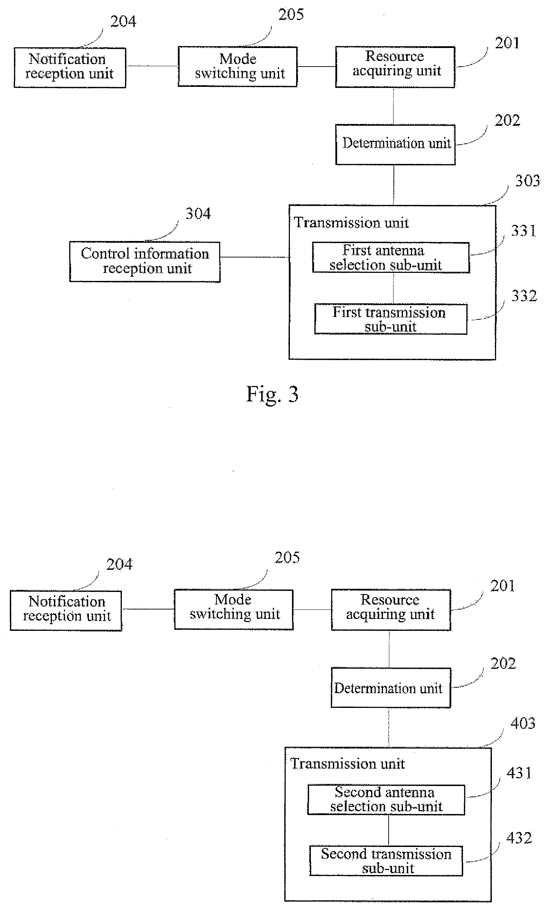

Reference is made to Fig. 3 illustrating a schematic diagram of a user equipment according to a second embodiment of the invention:
This embodiment differs from that illustrated in Fig. 2 in that the user equipment further includes a control information reception unit 304 configured to receive downlink control channel information which may be a value of signaling over a downlink channel, a signaling bit configured over the downlink channel to notify the user equipment about a specific antenna for use or a System Frame Number of the downlink channel.

A transmission unit 303 includes a first antenna selection sub-unit 331 and a first transmission sub-unit 332. Particularly, the first antenna selection sub-unit 331 is configured to determine, from the downlink control channel information and assigned statuses prescribed with a Node B, an antenna for use in a single TTI; and the first transmission sub-unit 332 is configured to transmit the uplink channel in the corresponding TTI over the determined antenna.

With the user equipment according to the embodiment of the invention, uplink channels can be transmitted over a plurality of antennas switched alternately in the time domain, and when parts of data over these uplink channels contain the same information, it is possible to offer a gain of transmission diversity, which can be acquired at the Node B by decoding reception over the uplink channels, thereby improving error-code performance of data.

Reference is made to Fig. 4 illustrating a schematic diagram of a user equipment according to a third embodiment of the invention.

This embodiment differs from that illustrated in Fig. 2 in that a transmission unit 403 includes a second antenna selection sub-unit 431 and a second transmission sub-unit 432. Particularly, the second antenna selection sub-unit 431 is configured to determine, from a correspondence relationship between the antennas and the timeslots prescribed with a Node B, antennas for use in the respective uplink timeslots; and the second transmission sub-unit 432 is configured to transmit the uplink channel in the corresponding uplink timeslots over the determined antennas.

With the user equipment according to the embodiment of the invention, uplink channels can be transmitted over a plurality of antennas switched alternately in the time domain, and when parts of data over these uplink channels contain the same information, it is possible to offer a gain of transmission diversity, which can be acquired at the Node B by decoding reception over the uplink channels, thereby improving error-code performance of data.

The user equipment according to an embodiment of the invention does not be limited to the foregoing several structures, and if a resource allocated from the network side may be either of a single uplink timeslot in a TTI and a plurality of uplink timeslots in a TTI, then the transmission unit 203 may include both the first antenna selection sub-unit 331 and the first transmission sub-unit in Fig. 3 and the second antenna selection sub-unit 431 and the second transmission sub-unit 432 in Fig. 4.

In correspondence to the uplink channel transmission method and device in a TDD system according to the embodiments of the invention, embodiments of the invention further provide a channel estimation method and device in a TDD system, where a Node B receives an uplink channel transmitted from a UE; an antenna used for the UE to transmit the uplink channel is determined; and channel estimation is performed on the uplink channel to acquire a column in a channel matrix corresponding to the antenna. Thus, the Node B can acquire the full channel matrix after acquiring columns in the channel matrix corresponding to respective antennas of the UE so that the TDD system can acquire full uplink channel estimation in the case that the UE can not perform uplink transmission concurrently over a plurality of antennas to ensure multi-antenna performance of the TDD system.

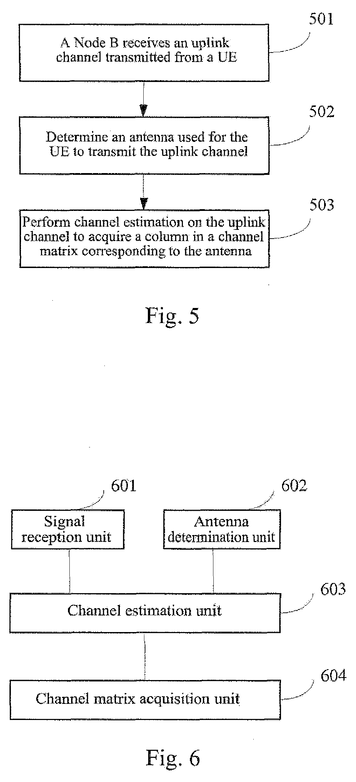

Reference is made to Fig. 5 illustrating a flow chart of a channel estimation method in a TDD system according to an embodiment of the invention.
In an operation 501, a Node B receives an uplink channel transmitted from a UE;
In an operation 502, an antenna used for the UE to transmit the uplink channel is determined;

There may be the following two cases of determining an antenna used for the UE to transmit the uplink channel.
(1) If a resource allocated from the network side to the UE is a single uplink timeslot in a TTI, then an antenna used for the UE in a single TTI is determined from downlink control channel information and assigned statuses prescribed with the UE; and
(2) If a resource allocated from the network side to the UE is a plurality of uplink timeslots in a TTI, then antennas used for the UE in the respective uplink timeslots are determined from a correspondence relationship between antennas and the timeslots as prescribed with the UE, where the downlink control channel information is a value of signaling over a downlink channel, a signaling bit configured over the downlink channel to notify the user equipment about a specific antenna for use or a System Frame Number of the downlink channel.

For details of the foregoing two cases, reference can be made to the foregoing description of the uplink channel transmission method in a TDD system according to the embodiment of the invention, and a repeated description thereof will be omitted here.

In an operation 503, channel estimation is performed on the uplink channel to acquire a column in a channel matrix corresponding to the antenna.

Thus, the Node B can acquire the full channel matrix after acquiring columns in the channel matrix corresponding to the respective antennas of the UE.

The channel estimation method in a TDD system according to the embodiment of the invention will be further described below by way of an example.

Assumed the Node B is provided with a number N_nb of antennas and the UE is provided with two antennas alternately switched in the time domain for transmission. The Node B configured with a memory in which a full channel matrix H with a size of N_nb×2 is stored may overwrite a specific column in H with a new result of uplink channel estimation to update stored H. The UE shall record in real time the antenna lastly used for transmission and thus switch to the other antenna for next transmission. A pointer variable may be configured at both of the Node B and the UE to point to a reference numeral of the antenna of the UE for upcoming transmission. Each time the UE transmits an uplink physical channel over a specific antenna, the Node B may perform uplink channel estimation once and update a column of channel fading coefficients in the channel matrix H corresponding to the antenna of the UE,

Assumed the Node B and the UE prescribe reference numerals of the two antennas of the UE, i.e., Tx1 and Tx2. The uplink physical channel which may be transmitted form the UE includes an HS-SICH, an E-PUCH, a DPCH, etc. The UE enters the MIMO operating mode in response to a notification of upper signaling an then determines from allocation of a resource at the network side (e.g., scheduling information over a downlink control channel of the Node B, allocation of uplink and downlink resources by an RNC, etc.) whether the resource allocated to the UE is a single uplink timeslot in a TTI or a plurality of uplink timeslots in a TTI. There are the following two cases.
1. When there are a plurality of uplink timeslots in a TTI, an uplink channel is transmitted alternately over the two antennas of the UE in the timeslots.
   The UE determines from allocation of a resource at the network side that a plurality of uplink timeslots in a TTI are allocated to the UE for transmission. Assumed there are a number N of uplink timeslots, i.e., TSup1, Tsup2 ..., TSupN. The N uplink timeslots allocated to the UE may or may not be consecutive.
   Assumed the uplink physical channel is transmitted alternately over the two antennas Tx1 and Tx2 of the UE in the N uplink timeslots switched in the time domain. The UE and the Node B prescribe a correspondence relationship between the two antennas of the UE and the uplink timeslots in a TTI. For example, there is transmission over Tx1 in the timeslots of TSup1, TSup3 ... and over Tx2 in the timeslots of TSup2, TSup4 ... That is, the prescribed antenna of the UE used in the timeslots of TSup1, TSup3 ... is Tx1, and the prescribed antenna of the UE used in the timeslots of TSup2, TSup4 ... is Tx2. Alike, the Node B stores channel estimation performed in the timeslots of TSup1, TSup3 ... correspondingly into a first column of the channel matrix, and a Node B stores channel estimation performed in the timeslots of TSup2, TSup4 ... correspondingly into a second column of the channel matrix.
   Both the Node B and the UE know what timeslots are uplink timeslots, and therefore in view of the foregoing prescribed relationship between the antennas of the UE and the timeslots, the Node B can perform channel estimation on a physical channel transmitted from the UE in each of the uplink timeslots, acquire channel fading coefficients between the antenna of the UE corresponding to the uplink timeslot and the respective antennas of the Node B and update a corresponding column in the channel matrix.
   It can be ensured that the Node B can identify properly which one of the antennas is used by the UE for transmission according to the prescribed reference numerals of the antennas and the correspondence relationship between the antennas of the UE and the uplink timeslots and may not mistake a relationship between the antenna of the UE and the corresponding column in the channel matrix stored in the Node B even in the case of occurring abnormality, e.g., lost of a transmitted channel, etc.
2. When there is a single uplink timeslot in a TTI, an uplink channel is transmitted alternately over the two antennas of the UE in TTIs.

In order to ensure that the Node B can identity properly an antenna used for the UE, the Node B and the UE shall collectively maintain the serial numbers of the transmission antennas of the UE, i.e., Tx1 and Tx2, so that the Node B can perform channel estimation on the transmission antenna used for the UE and update a corresponding column of the channel matrix.

The Node B and the UE collectively initiate assignment of the serial numbers of the transmission antennas of the UE in which two statuses of "Odd" and "Even" can be assigned, where "Odd" corresponds to Tx1 of the UE and "Even" corresponds to Tx2 of the UE. Each time the Node B allocates a physical resource (including a timeslot, a channelization code, etc.) to the UE through scheduling, the UE transmits an uplink physical channel over the physical resource. When there is a single uplink timeslot in a TTI, the UE transmits the uplink physical channel alternately over the two antennas in the single uplink timeslot in each TTI, and the Node B performs channel estimation and updates a corresponding column of the channel matrix, and then the Node B and the UE change their respective assigned statuses of "Odd" and "Even".

In this case, the Node B can notify over a downlink control channel the UE about the antenna used in the single uplink timeslot, thereby ensuring consistency of an assigned status between them. For details thereof, reference can be made to the foregoing description, and a repeated description thereof will be omitted here.

Thus, the Node B upon reception of the uplink channel performs channel estimation and knows specific one of the antenna of the UE and thus updates the column in the stored channel matrix corresponding to the antenna of the UE. The full channel matrix H can be acquired after transmission from the UE in turn over the respective antennas.

With the channel estimation method in a TDD system according to the embodiment of the invention, the TDD system can support performing pre-coding, switching of an antenna, etc., based upon a full channel matrix on the condition that the UE can not perform uplink transmission concurrently over a plurality of antennas, thereby ensuring multi-antenna performance of the TDD system.

Correspondingly, an embodiment of the invention provides a Node B as illustrated in Fig. 6 illustrating a schematic diagram of the structure of the Node B.

The Node B includes a signal reception unit 601, an antenna determination unit 602 and a channel estimation unit 603 and possibly also a channel matrix acquisition unit 604. Particularly, the signal reception unit 601 is configured to receive an uplink channel transmitted from a UE; the antenna determination unit 602 is configured to determine an antenna used for the UE to transmit the uplink channel; the channel estimation unit 603 is configured to perform channel estimation on the uplink channel and to acquire a column in a channel matrix corresponding to the antenna; and the channel matrix acquisition unit 604 is configured to acquire the full channel matrix after the channel estimation unit acquires columns in the channel matrix corresponding to respective antennas of the user equipment.

Particularly, the antenna determination unit 602 may determine an antenna used for the user equipment to transmit the uplink channel as follows:
if a resource allocated from the network side to the user equipment is a single uplink timeslot in a TTI, then an antenna used for the user equipment in a single TTI is determined from downlink control channel information and assigned statuses prescribed with the user equipment, where the downlink control channel information is a value of signaling over a downlink channel, a signaling bit configured over the downlink channel to notify the user equipment about a specific antenna for use or a System Frame Number of the downlink channel; and
if a resource allocated from the network side to the user equipment is a plurality of uplink timeslots in a TTI, then antennas used for the user equipment in the respective uplink timeslots are determined from a correspondence relationship between the antennas and the timeslots as prescribed with the user equipment.

With the Node B according to the embodiment of the invention, the full uplink channel matrix can be acquired to thereby acquire full uplink channel information.

The channel estimation method and device in a TDD system according to the embodiments of the invention can be applicable to various contexts in which it is necessary to acquire a full channel matrix, e.g., to SVD-based codebook-free pre-coding in which it is necessary to perform uplink channel estimation at the side of the Node B and to acquire a full spatial channel matrix H and then perform SVD thereon into several eigenvectors. The number of the eigenvectors is the rank of the channel matrix H. When the Node B is to transmit a number m (m is not larger than the rank of H) of downlink data streams concurrently, it selects from the eigenvectors resulting from SVD a corresponding number m of eigenvectors with a significant eigenvalue, where each of the eigenvectors weights one of the data streams for transmission. Also in switching of an antenna mode, AMC, etc., it is also necessary to acquire signal to noise ratios of respective detected data streams in respective antenna modes with use of a full channel matrix H in combination with a detection algorithm or another factor.

The invention provides the following technical solutions.

An uplink channel transmission method in a TDD system includes:
acquiring by a user equipment a resource allocated from a network side upon entering a Multiple Input Multiple Output (MIMO) mode; and
transmitting by the user equipment an uplink channel alternately over a plurality of antennas sequentially in TTIs if the resource is a single uplink timeslot in a TTI; or
transmitting by the user equipment an uplink channel alternately over the antennas sequentially in a plurality of uplink timeslots if the resource is the uplink timeslots in a TTI.

A channel estimation method in a TDD system includes:
receiving by a Node B an uplink channel transmitted from a user equipment;
determining an antenna used for the user equipment to transmit the uplink channel; and
performing channel estimation on the uplink channel and acquiring a column in a channel matrix corresponding to the antenna.

A user equipment includes:
a resource acquiring unit configured to acquire a resource allocated from a network side upon entering a Multiple Input Multiple Output (MIMO) mode;
a determination unit configured to determine whether the resource is a single uplink timeslot in a transmission unit configured to transmit an uplink channel over a plurality of antennas by transmitting the uplink channel alternately over the antennas sequentially in TTIs if the resource is a single uplink timeslot in a TTI or by transmitting the uplink channel alternately over the antennas sequentially in a plurality of uplink timeslots if the resource is the uplink timeslots in a TTI.

A Node B includes:
a signal reception unit configured to receive an uplink channel transmitted from a user equipment;
an antenna determination unit configured to determine an antenna used for the user equipment to transmit the uplink channel; and
a channel estimation unit configured to perform channel estimation on the uplink channel and to acquire a column in a channel matrix corresponding to the antenna.

Those ordinarily skilled in the art can appreciate that all or a part of the operations in the foregoing methods according to the embodiments of the invention can be performed with program instructing relevant hardware, which can be stored in a computer readable storage medium, e.g., an ROM/RAM, a magnetic disk, an optical disk, etc.

The embodiments of the invention has been described in details as above, the invention has been set forth in this context in connection with the embodiments thereof, and the foregoing description of the embodiments is merely intended to facilitate understanding of the systems and methods according to the invention which is defined and limited only by the appended claims.

## Claims

1. An uplink channel transmission method in a Time Division Duplex, TDD, system, the method comprising:
acquiring from allocation signaling of a resource, by a user equipment, the resource for transmitting an uplink channel allocated from a network side, upon entering a Multiple Input Multiple Output, MIMO, mode (101); and
when each of Transmission Time Intervals, TTIs, comprised in the resource comprises a single uplink timeslot, transmitting by the user equipment the uplink channel alternately over a plurality of antennas sequentially in respective TTIs (103);
wherein for each TTI, the transmitting comprises:
determining by the user equipment, from received downlink control channel information transmitted from the network side and a mapping relationship between downlink control channel information and assigned statuses prescribed with a Node B, an antenna for use in the TTI, wherein each of the assigned statuses corresponds to one antenna among the plurality of antennas; and transmitting the uplink channel in the TTI over the determined antenna;
wherein the downlink control channel information is:
a value of signaling over a downlink channel; or
a signaling bit configured over the downlink channel to notify the user equipment about a specific antenna for use; or
a System Frame Number of the downlink channel.

2. The method of claim 1, wherein the value of signaling over the downlink channel comprises:
a value of HS-SCCH Cyclic Serial Number, HCSN, signaling over a High-Speed Shared Control Channel, HS-SCCH; or
a value of E-AGCH Cyclic Serial Number, ECSN, signaling over an Enhanced Absolute Grant Channel, E-AGCH.

3. A channel estimation method in a TDD system, the method comprising:
receiving by a Node B an uplink channel transmitted from a user equipment (501);
determining an antenna used for the user equipment to transmit the uplink channel (502); and
performing channel estimation on the uplink channel to acquire a column in a channel matrix corresponding to the antenna (503);
wherein when each of Transmission Time Intervals, TTIs, comprised in a resource allocated from a network side to the user equipment comprises a single uplink timeslot, for each TTI, the determining comprises:
determining by the Node B, from downlink control channel information transmitted to the user equipment and a mapping relationship between downlink control channel information and assigned statuses prescribed with the user equipment, an antenna used for the user equipment in the TTI, wherein each of the assigned statuses corresponds to one antenna among the plurality of antennas;
wherein the downlink control channel information is:
a value of signaling over a downlink channel; or
a signaling bit configured over the downlink channel to notify the user equipment about a specific antenna for use; or
a System Frame Number of the downlink channel.

4. The method of claim 3, further comprising:
acquiring a full channel matrix after the Node B acquires columns in the channel matrix corresponding to respective antennas of the user equipment.

5. The method of claim 3, wherein the value of signaling over the downlink channel comprises:
a value of HS-SCCH Cyclic Serial Number, HCSN, signaling over a High-Speed Shared Control Channel, HS-SCCH; or
a value of E-AGCH Cyclic Serial Number, ECSN, signaling over an Enhanced Absolute Grant Channel, E-AGCH.

6. A user equipment, comprising:
a resource acquiring unit (201) configured to acquire, from allocation signaling of a resource, the resource for transmitting an uplink channel allocated from a network side, upon entering a Multiple Input Multiple Output, MIMO, mode;
a determination unit (202) configured to determine whether each of Transmission Time Intervals, TTIs, comprised in the resource comprises a single uplink timeslot; and
a transmission unit (203, 303) configured to transmit the uplink channel over a plurality of antennas by transmitting the uplink channel alternately over the antennas sequentially in respective TTIs when each of TTIs comprised in the resource comprises a single uplink timeslot;
wherein the user equipment further comprises a control information reception unit (304) configured to receive downlink control channel information transmitted from the network side for each TTI, and wherein the transmission unit (303) comprises:
a first antenna selection sub-unit (331) configured to determine, for each TTI, from the downlink control channel information and a mapping relationship between downlink control channel information and assigned statuses prescribed with a Node B, an antenna for use in the TTI, wherein each of the assigned statuses corresponds to one antenna among the plurality of antennas; and
a first transmission sub-unit (332) configured to transmit the uplink channel in the TTI over a determined antenna;
wherein the downlink control channel information is:
a value of signaling over a downlink channel; or
a signaling bit configured over the downlink channel to notify the user equipment about a specific antenna for use; or
a System Frame Number of the downlink channel.

7. The user equipment of claim 6, further comprising:
a notification reception unit (204) configured to receive a notification of radio resource control signaling transmitted from the network side; and
a mode switching unit (205) configured to enter the MIMO mode according to the notification of radio resource control signaling transmitted from the network side.

8. A Node B, comprising:
a signal reception unit (601) configured to receive an uplink channel transmitted from a user equipment;
an antenna determination unit (602) configured to determine an antenna used for the user equipment to transmit the uplink channel; and
a channel estimation unit (603) configured to perform channel estimation on the uplink channel and to acquire a column in a channel matrix corresponding to the antenna;
wherein when each of Transmission Time Intervals, TTIs, comprised in a resource allocated from a network side to the user equipment comprises a single uplink timeslot, for each TTI, the antenna determination unit (602) determines an antenna used for the user equipment to transmit the uplink channel by:
determining, from downlink control channel information transmitted to the user equipment and a mapping relationship between downlink control channel information and assigned statuses prescribed with the user equipment, an antenna used for the user equipment in the TTI, wherein each of the assigned statuses corresponds to one antenna among the plurality of antennas;
wherein the downlink control channel information is:
a value of signaling over a downlink channel; or
a signaling bit configured over the downlink channel to notify the user equipment about a specific antenna for use; or
a System Frame Number of the downlink channel.

9. The Node B of claim 8, further comprising:
a channel matrix acquisition unit (604) configured to acquire a full channel matrix after the channel estimation unit (603) acquires columns in the channel matrix corresponding to respective antennas of the user equipment.

## Patentansprüche

1. Aufwärtsstrecken-Kanalübertragungsverfahren in einem Zeitduplex- bzw. TDD-System, wobei das Verfahren Folgendes umfasst:
ein Benutzergerät beschafft aus Vergabesignalisierung einer Ressource die Ressource zum Übertragen eines Aufwärtsstreckenkanals, der von einer Netzseite vergeben wird, wenn in einen Modus (101) mehrerer Eingänge und mehrerer Ausgänge bzw. MIMO eingetreten wird; und
das Benutzergerät überträgt, wenn in der Ressource enthaltene Übertragungszeitintervalle TTI allesamt einen einzigen Aufwärtsstreckenzeitschlitz umfassen, den Aufwärtsstreckenkanal alternierend über mehrere Antennen sequentiell in jeweiligen TTI (103);
wobei für jedes TTI das Übertragen Folgendes umfasst:
das Benutzergerät bestimmt aus empfangenen Abwärtsstrecken-Steuerkanalinformationen, die von der Netzseite übertragen werden, und einer Abbildungsbeziehung zwischen Abwärtsstrecken-Steuerkanalinformationen und zugewiesenen Statussen, die mit einem Node B vorgeschrieben werden, eine Antenne zur Verwendung in dem TTI, wobei jeder der zugewiesenen Statusse einer Antenne der mehreren Antennen entspricht; und der Aufwärtsstreckenkanal wird über die bestimmte Antenne in dem TTI übertragen;
wobei es sich bei den Abwärtsstrecken-Steuerkanalinformationen um Folgendes handelt:
einen Wert von Signalisierung über einen Abwärtsstreckenkanal; oder
ein über den Abwärtsstreckenkanal konfiguriertes Signalisierungsbit zum Benachrichtigen des Benutzergeräts über eine spezifische zu verwendende Antenne; oder
eine System Frame Number des Abwärtsstreckenkanals.

2. Verfahren nach Anspruch 1, wobei der Wert der Signalisierung über den Abwärtsstreckenkanal Folgendes umfasst:
einen Wert von Signalisierung der HS-SCCH Cyclic Serial Number HCSN über einen High-Speed Shared Control Channel HS-SCCH; oder
einen Wert von Signalisierung der E-AGCH Cyclic Serial Number ECSN über einen Enhanced Absolute Grant Channel E-AGCH.

3. Kanalschätzungsverfahren in einem TDD-System, wobei das Verfahren Folgendes umfasst:
Empfangen eines von einem Benutzergerät übertragenen Aufwärtsstreckenkanals durch einen Node B (501);
Bestimmen einer für das Benutzergerät zum Übertragen des Aufwärtsstreckenkanals verwendeten Antenne (502); und
Durchführen von Kanalschätzung an dem Aufwärtsstreckenkanal, um eine Spalte in einer Kanalmatrix zu beschaffen, die der Antenne entspricht (503);
wobei, wenn in einer Ressource, die von einer Netzseite an das Benutzergerät vergeben wird, enthaltene Übertragungszeitintervalle TTI allesamt einen einzigen Aufwärtsstreckenzeitschlitz umfassen, für jedes TTI das Bestimmen Folgendes umfasst:
Bestimmen durch den Node B aus Abwärtsstrecken-Steuerkanalinformationen, die zu dem Benutzergerät übertragen werden, und einer Abbildungsbeziehung zwischen Abwärtsstrecken-Steuerkanalinformationen und zugewiesenen Statussen, die mit dem Benutzergerät vorgeschrieben werden, einer für das Benutzergerät in dem TTI verwendeten Antenne, wobei jeder der zugewiesenen Statusse einer Antenne der mehreren Antennen entspricht;
wobei es sich bei den Abwärtsstrecken-Steuerkanalinformationen um Folgendes handelt:
einen Wert von Signalisierung über einen Abwärtsstreckenkanal; oder
ein über den Abwärtsstreckenkanal konfiguriertes Signalisierungsbit zum Benachrichtigen des Benutzergeräts über eine spezifische zu verwendende Antenne; oder
eine System Frame Number des Abwärtsstreckenkanals.

4. Verfahren nach Anspruch 3, ferner umfassend:
Beschaffen einer vollen Kanalmatrix, nachdem der Node B Spalten in der Kanalmatrix entsprechend jeweiligen Antennen des Benutzergeräts beschafft.

5. Verfahren nach Anspruch 3, wobei der Wert der Signalisierung über den Abwärtsstreckenkanal Folgendes umfasst:
einen Wert von Signalisierung der HS-SCCH Cyclic Serial Number HCSN über einen High-Speed Shared Control Channel HS-SCCH; oder
einen Wert von Signalisierung der E-AGCH Cyclic Serial Number ECSN über einen Enhanced Absolute Grant Channel E-AGCH.

6. Benutzergerät, umfassend:
eine Ressourcenbeschaffungseinheit (201), die dafür ausgelegt ist, aus Vergabesignalisierung einer Ressource die Ressource zum Übertragen eines Aufwärtsstreckenkanals zu beschaffen, der von einer Netzseite vergeben wird, wenn in einen Modus mehrerer Eingänge und mehrerer Ausgänge bzw. MIMO eingetreten wird;
eine Bestimmungseinheit (202), die dafür ausgelegt ist, zu bestimmen, ob in der Ressource enthaltene Übertragungszeitintervalle TTI allesamt einen einzigen Aufwärtsstreckenzeitschlitz umfassen; und
eine Übertragungseinheit (203, 303), die dafür ausgelegt ist, den Aufwärtsstreckenkanal über mehrere Antennen zu übertragen, indem der Aufwärtsstreckenkanal alternierend über die Antennen sequentiell in jeweiligen TTI übertragen wird, wobei jedes der in der Ressource enthalten TTI einen einzigen Aufwärtsstreckenzeitschlitz umfasst;
wobei das Benutzergerät ferner eine Steuerinformations-Empfangseinheit (304) umfasst, die dafür ausgelegt ist, Abwärtsstrecken-Steuerkanalinformationen zu empfangen, die von der Netzseite für jedes TTI übertragen werden, und wobei die Übertragungseinheit (303) Folgendes umfasst:
eine erste Antennenauswahl-Subeinheit (331), die dafür ausgelegt ist, für jedes TTI aus den Abwärtsstrecken-Steuerkanalinformationen und einer Abbildungsbeziehung zwischen Abwärtsstrecken-Steuerkanalinformationen und zugewiesenen Statussen, die mit einem Node B vorgeschrieben werden, eine Antenne zur Verwendung in dem TTI zu bestimmen, wobei jeder der zugewiesenen Statusse einer Antenne der mehreren Antennen entspricht; und
eine erste Übertragungs-Subeinheit (332), die dafür ausgelegt ist, den Aufwärtsstreckenkanal in dem TTI über eine bestimmte Antenne zu übertragen;
wobei es sich bei den Abwärtsstrecken-Steuerkanalinformationen um Folgendes handelt:
einen Wert von Signalisierung über einen Abwärtsstreckenkanal; oder
ein über den Abwärtsstreckenkanal konfiguriertes Signalisierungsbit zum Benachrichtigen des Benutzergeräts über eine spezifische zu verwendende Antenne; oder
eine System Frame Number des Abwärtsstreckenkanals.

7. Benutzergerät nach Anspruch 6, ferner umfassend:
eine Benachrichtigungsempfangseinheit (204), die dafür ausgelegt ist, eine Benachrichtigung über Funkressourcen-Steuersignalisierung zu empfangen, die von der Netzseite übertragen wird; und
eine Modusumschalteinheit (205), die dafür ausgelegt ist, gemäß der Benachrichtigung über Funkressourcen-Steuersignalisierung, die von der Netzseite übertragen wird, in den MIMO-Modus einzutreten.

8. Node B, umfassend:
eine Signalempfangseinheit (601), die dafür ausgelegt ist, einen Aufwärtsstreckenkanal zu empfangen, der von einem Benutzergerät übertragen wird;
eine Antennenbestimmungseinheit (602), die dafür ausgelegt ist, eine Antenne zu bestimmen, die für das Benutzergerät zum Übertragen des Aufwärtsstreckenkanals verwendet wird; und
eine Kanalschätzungseinheit (603), die dafür ausgelegt ist, Kanalschätzung an dem Aufwärtsstreckenkanal durchzuführen und eine Spalte in einer Kanalmatrix entsprechend der Antenne zu beschaffen;
wobei, wenn in einer von einer Netzseite an das Benutzergerät vergebene Ressource enthaltene Übertragungszeitintervalle TTI allesamt einen einzigen Aufwärtsstreckenzeitschlitz umfassen, für jedes TTI die Antennenbestimmungseinheit (602) eine für das Benutzergerät zum Übertragen des Aufwärtsstreckenkanals verwendete Antenne bestimmt durch:
Bestimmen aus Abwärtsstrecken-Steuerkanalinformationen, die zu dem Benutzergerät übertragen werden, und einer Abbildungsbeziehung zwischen Abwärtsstrecken-Steuerkanalinformationen und zugewiesenen Statussen, die mit dem Benutzergerät vorgeschrieben werden, einer für das Benutzergerät in dem TTI verwendeten Antenne, wobei jeder der zugewiesenen Statusse einer Antenne der mehreren Antennen entspricht;
wobei es sich bei den Abwärtsstrecken-Steuerkanalinformationen um Folgendes handelt:
einen Wert von Signalisierung über einen Abwärtsstreckenkanal; oder
ein über den Abwärtsstreckenkanal konfiguriertes Signalisierungsbit zum Benachrichtigen des Benutzergeräts über eine spezifische zu verwendende Antenne; oder
eine System Frame Number des Abwärtsstreckenkanals.

9. Node B nach Anspruch 8, ferner umfassend:
eine Kanalmatrix-Beschaffungseinheit (604), die dafür ausgelegt ist, eine volle Kanalmatrix zu beschaffen, nachdem die Kanalschätzungseinheit (603) Spalten in der Kanalmatrix entsprechend jeweiligen Antennen des Benutzergeräts beschafft.

## Revendications

1. Procédé d'émission de canal de liaison montante dans un système de duplexage par répartition dans le temps, TDD, le procédé comprenant les étapes consistant à :
acquérir à partir d'une signalisation d'attribution d'une ressource, par un équipement d'utilisateur, la ressource pour émettre un canal de liaison montante, attribuée depuis un côté réseau, lors de l'entrée dans un mode d'entrées multiples/sorties multiples, MIMO (101) ; et
lorsque chacun des intervalles de temps d'émission, TTI, compris dans la ressource comprend un créneau temporel de liaison montante unique, émettre par l'équipement d'utilisateur le canal de liaison montante alternativement sur une pluralité d'antennes, séquentiellement, dans des TTI respectifs (103) ;
l'action d'émettre comprenant, pour chaque TTI, les étapes consistant à :
déterminer, par l'équipement d'utilisateur, à partir des informations de canal de commande de liaison descendante reçues du côté réseau et d'une relation de mise en correspondance entre les informations de canal de commande de liaison descendante et les statuts assignés prescrits avec un noeud B, une antenne à utiliser dans le TTI, chacun des statuts assignés correspondant à une antenne parmi la pluralité d'antennes ; et émettre le canal de liaison montante dans le TTI au moyen de l'antenne déterminée ;
les informations de canal de commande de liaison descendante étant :
une valeur de la signalisation effectuée sur un canal de liaison descendante ; ou
un bit de signalisation configuré sur le canal de liaison descendante pour informer l'équipement d'utilisateur au sujet d'une antenne spécifique à utiliser ; ou
un numéro de trame système du canal de liaison descendante.

2. Procédé selon la revendication 1, dans lequel la valeur de la signalisation effectuée sur le canal de liaison descendante comprend :
une valeur d'une signalisation de numéro de série cyclique HS-SCCH, HCSN, effectuée sur un canal de commande partagé rapide, HS-SCCH ; ou
une valeur d'une signalisation de numéro de série cyclique E-AGCH, ECSN, effectuée sur un canal d'octroi absolu amélioré, E-AGCH.

3. Procédé d'estimation de canal exécuté dans un système TDD, le procédé comprenant les étapes consistant à :
recevoir par un noeud B un canal de liaison montante émis par un équipement d'utilisateur (501) ;
déterminer une antenne utilisée pour l'équipement d'utilisateur pour l'émission du canal de liaison montante (502) ; et
effectuer une estimation de canal sur le canal de liaison montante pour acquérir une colonne dans une matrice de canaux correspondant à l'antenne (503) ;
dans lequel procédé, lorsque chacun des intervalles de temps d'émission, TTI, compris dans une ressource attribuée depuis un côté réseau à l'équipement d'utilisateur comprend un créneau temporel de liaison montante unique, pour chaque TTI, l'action de déterminer comprend les étapes consistant à :
déterminer, par le noeud B, à partir des informations de canal de commande de liaison descendante envoyées à l'équipement d'utilisateur et d'une relation de mise en correspondance entre les informations de canal de commande de liaison descendante et les statuts assignés prescrits avec l'équipement d'utilisateur, une antenne utilisée pour l'équipement d'utilisateur dans le TTI, chacun des statuts assignés correspondant à une antenne parmi la pluralité d'antennes ;
les informations de canal de commande de liaison descendante étant :
une valeur de la signalisation effectuée sur un canal de liaison descendante ; ou
un bit de signalisation configuré sur le canal de liaison descendante pour informer l'équipement d'utilisateur au sujet d'une antenne spécifique à utiliser ; ou
un numéro de trame système du canal de liaison descendante.

4. Procédé selon la revendication 3, comprenant également l'étape consistant à :
acquérir une matrice de canaux complète après que le noeud B a acquis les colonnes de la matrice de canaux correspondant aux antennes respectives de l'équipement d'utilisateur.

5. Procédé selon la revendication 3, dans lequel la valeur de la signalisation effectuée sur le canal de liaison descendante comprend :
une valeur d'une signalisation de numéro de série cyclique HS-SCCH, HCSN, effectuée sur un canal de commande partagé rapide, HS-SCCH ; ou
une valeur d'une signalisation de numéro de série cyclique E-AGCH, ECSN, effectuée sur un canal d'octroi absolu amélioré, E-AGCH.

6. Équipement d'utilisateur, comprenant :
une unité d'acquisition de ressource (201) configurée pour acquérir, à partir d'une signalisation d'attribution d'une ressource, la ressource pour émettre un canal de liaison montante attribué depuis un côté réseau, lors de l'entrée dans un mode d'entrées multiples/sorties multiples, MIMO ;
une unité de détermination (202) configurée pour déterminer si chacun des intervalles de temps d'émission, TTI, compris dans la ressource comprend un créneau temporel de liaison montante unique ; et
une unité d'émission (203, 303) configurée pour émettre le canal de liaison montante sur une pluralité d'antennes en émettant le canal de liaison montante alternativement sur les antennes, séquentiellement, dans des TTI respectifs, lorsque chacun des TTI compris dans la ressource comprend un créneau temporel de liaison montante unique ;
l'équipement d'utilisateur comprenant également une unité de réception d'informations de commande (304) configurée pour recevoir des informations de canal de commande de liaison descendante émises par le côté réseau pour chaque TTI, l'unité d'émission (303) comprenant :
une première sous-unité de sélection d'antenne (331) configurée pour déterminer, pour chaque TTI, à partir des informations de canal de commande de liaison descendante et d'une relation de mise en correspondance entre les informations de canal de commande de liaison descendante et les statuts assignés prescrits avec un noeud B, une antenne à utiliser dans le TTI, chacun des statuts assignés correspondant à une antenne parmi la pluralité d'antennes ; et
une première sous-unité d'émission (332) configurée pour émettre le canal de liaison montante dans le TTI au moyen de l'antenne déterminée ;
les informations de canal de commande de liaison descendante étant :
une valeur de la signalisation effectuée sur un canal de liaison descendante ; ou
un bit de signalisation configuré sur le canal de liaison descendante pour informer l'équipement d'utilisateur au sujet d'une antenne spécifique à utiliser ; ou
un numéro de trame système du canal de liaison descendante.

7. Équipement d'utilisateur selon la revendication 6, comprenant également :
une unité de réception de notification (204) configurée pour recevoir une notification de signalisation de commande de ressource radio émise par le côté réseau ; et
une unité de commutation de mode (205) configurée pour entrer dans le mode MIMO selon la notification de signalisation de commande de ressource radio émise par le côté réseau.

8. Noeud B, comprenant :
une unité de réception de signal (601) configurée pour recevoir un canal de liaison montante émis par un équipement d'utilisateur ;
une unité de détermination d'antenne (602) configurée pour déterminer une antenne utilisée pour permettre à l'équipement d'utilisateur d'émettre le canal de liaison montante ; et
une unité d'estimation de canal (603) configurée pour effectuer une estimation de canal sur le canal de liaison montante et pour acquérir une colonne dans une matrice de canaux correspondant à l'antenne ;
dans lequel noeud B, lorsque chacun des intervalles de temps d'émission, TTI, compris dans une ressource attribuée depuis un côté réseau à l'équipement d'utilisateur comprend un créneau temporel de liaison montante unique, pour chaque TTI, l'unité de détermination d'antenne (602) détermine une antenne utilisée pour permettre à l'équipement d'utilisateur d'émettre le canal de liaison montante par l'étape consistant à :
déterminer, à partir des informations de canal de commande de liaison descendante envoyées à l'équipement d'utilisateur et d'une relation de mise en correspondance entre les informations de canal de commande de liaison descendante et les statuts assignés prescrits avec l'équipement d'utilisateur, une antenne utilisée pour l'équipement d'utilisateur dans le TTI, chacun des statuts assignés correspondant à une antenne parmi la pluralité d'antennes ;
les informations de canal de commande de liaison descendante étant :
une valeur de la signalisation effectuée sur un canal de liaison descendante ; ou
un bit de signalisation configuré sur le canal de liaison descendante pour informer l'équipement d'utilisateur au sujet d'une antenne spécifique à utiliser ; ou
un numéro de trame système du canal de liaison descendante.

9. Noeud B selon la revendication 8, comprenant également :
une unité d'acquisition de matrice de canaux (604) configurée pour acquérir une matrice de canaux complète après que l'unité d'estimation de canal (603) a acquis les colonnes de la matrice de canaux correspondant aux antennes respectives de l'équipement d'utilisateur.
